# EUROPÄISCHE PATENTANMELDUNG

(11) **EP 2 881 622 A1**
(43) Veröffentlichungstag der Anmeldung: **10.06.2015**
(21) Anmeldenummer: 13464020.0
(22) Anmeldetag: 05.12.2013
(51) Int. Cl.: F16H 57/031

(54) **Aktuator**

(71) Anmelder: Continental Automotive GmbH, 30165 Hannover (DE)
(72) Erfinder: Lukacsel, Mihai, 330007 Deva (RO)

(57) **Zusammenfassung**

Gegenstand der Erfindung ist ein Aktuator mit einem Gehäuse 1, einem in einer Kammer 2 des Gehäuses langeordneten Elektromotor und einem Getriebe 3, welches eingangsseitig mit der Welle des Elektromotors und ausgangsseitig mit einem Stellglied 5 verbunden ist, wobei das Getriebe 3 in einer zweiten Kammer 6 des Gehäuses 1 angeordnet ist, die mit einem Deckel 7 verschlossen ist. Die zweite Kammer 6 besitzt einen runden Querschnitt und ist mit einem runden Deckel 7 verschlossen.

## Beschreibung

Gegenstand der Erfindung ist ein Aktuator mit einem Gehäuse, einem in einer Kammer des Gehäuses angeordneten Elektromotor und einem Getriebe, welches eingangsseitig mit der Welle des Elektromotors und ausgangsseitig mit einem Stellglied verbunden ist, wobei das Getriebe in einer zweiten Kammer des Gehäuses angeordnet ist, die mit einem Deckel verschlossen ist.

Derartige Aktuatoren sind aus Kraftfahrzeugen als Drosselklappensteller, Abgasventile oder Steller zum Betätigen von Ventilen oder Klappen bekannt. Die Motorwelle ist in der Regel parallel zu der das Stellglied, insbesondere die Klappe, tragende Welle angeordnet. Über das Getriebe sind beide Wellen miteinander verbunden. Das Getriebe und der Elektromotor sind jeweils in separaten Kammern des Gehäuses angeordnet. Die Kammern dienen der Aufnahme und dem Schutz der jeweiligen Baugruppe. Aufgrund der unterschiedlichen Einsatzgebiete kommen unterschiedliche Elektromotoren, Getriebe und Stellglieder zum Einsatz. Das Gehäuse muss daher an die Komponenten und Einbaubedingungen, insbesondere im Bereich des Stellglieds, angepasst werden. Insbesondere die verschiedenen Getriebegestaltungen bewirken, dass der Querschnitt der zweiten Kammer und damit auch der Deckel stark variiert. Dies hat eine beträchtliche Gehäusevielfalt, zur Folge, so dass die mittels Gießen hergestellten Gehäuse aufgrund der geringen Stückzahlen je Gehäuseform kostenintensiv sind, was in gleicher Weise für den Deckel der zweiten Kammer gilt. Darüber hinaus besitzen die jeweiligen zweiten Kammern und die dazugehörigen Deckel einen unregelmäßigen Querschnitt, weshalb ein Deckel mit dem Gehäuse mittels mehrerer Schrauben befestigt ist, wobei die Position der Schrauben ebenfalls je nach Aktuator variieren.

Der Erfindung liegt daher die Aufgabe zugrunde, einen kostengünstigen Aktuator zu schaffen.

Gelöst wird die Aufgabe dadurch, dass die zweite Kammer einen runden Querschnitt besitzt und mit einem runden Deckel verschlossen ist und dass der Deckel gegen das Gehäuse mittels einer Verbindung gegen ein Lösen gesichert ist.

Der erfindungsgemäße Aktuator besitzt eine zweite Kammer mit einem definierten Querschnitt, wobei der runde Querschnitt in gewissem Rahmen verschiedene Anordnungen des Getriebes ermöglicht. Sofern die Anpassungen der einzelnen Gehäuse an die jeweiligen Einbaubedingungen durch Ausnutzung des Querschnitts nicht ausreichend sind, können weitere Anpassungen über die Wahl des Durchmessers erfolgen. Bereits dadurch lässt sich die Gehäusevielfalt und somit die Kosten deutlich reduzieren. Der wesentlichste Vorteil besteht jedoch darin, dass dieser Querschnitt das Verbinden von Deckel und Gehäuse mit nur einer Rastverbindung erlaubt. Mehrere Verbindungsstellen, wie bislang üblich sind nicht mehr erforderlich. Dadurch reduzieren sich der Herstellungsaufwand und der Montageaufwand im erheblichen Maße. Zur deutlich vereinfachteren und somit kostengünstigeren Herstellung trägt es außerdem bei, dass das Gehäuses im Bereich der zweiten Kammer und der Deckel einen runden Querschnitt besitzen.

Für die Verbindung werden keine zusätzlichen Bauteile benötigt, wenn die Rastverbindung zwischen Deckel und Gehäuse ausgebildet ist. Dabei ist an einem der beiden Teile eine Raststelle angeordnet, in die ein am anderen Teil ausgebildete Rasthaken eingreift.

In einer anderen vorteilhaften Ausgestaltung ist die Rastverbindung zwischen einem den Deckel teilweise umgreifenden Ring und dem Gehäuse ausgebildet. In dieser Ausgestaltung wird der Deckel auf die zweite Kammer aufgesetzt. Die Sicherung gegen ein Lösen erfolgt durch den Ring, welcher über den Deckel geschoben wird, so dass er diesen teilweise umgreift. Durch Verrasten des Rings mit dem Gehäuse wird die Verbindung gesichert. Diese Ausgestaltung hat den Vorteil, dass bei unterschiedlichen Anforderungen an die Rastverbindung nicht mehr der gesamte Deckel verändert werden muss, sondern lediglich der Ring angepasst wird.

Ein sicherer Schutz des Getriebes vor Umwelteinflüssen wird erreicht, wenn zwischen dem Kammergehäuse und dem Deckel eine Dichtung zum Abdichten der zweiten Kammer angeordnet ist. Aufgrund der Kreisform ist eine solche Dichtung wesentlich günstiger als herkömmliche Dichtungen.

In einer weiteren vorteilhaften Ausgestaltung weisen die zweite Kammer und der Deckel Mittel zum lagerichtigen Aufsetzen des Deckels auf die zweite Kammer auf. Das ist insbesondere dann von Vorteil, wenn beispielsweise an der Außenseite des Deckels Elemente wie Stecker zur Kontaktierung des Aktuators angeformt sind. Diese Elemente müssen oftmals in einer bestimmten Ausrichtung zur zweiten Kammer oder zum Gehäuse des Aktuators ausgerichtet sein. Solche Elemente können aber auch an der Innenseite des Deckels angeordnete unterstützende Elemente wie Verstärkungen und Rippen oder Halterungen für in der zweiten Kammer angeordnete Baugruppen, wie Getriebe, Positionssensor oder ähnliches sein.

Ein mehreren Ausführungsbeispielen wird die Erfindung näher erläutert. Es zeigen in:
- Fig. 1:: einen Aktuator nach dem Stand der Technik,
- Fig. 2:: einen erfindungsgemäßen Aktuator,
- Fig. 3, 4:: den Dichtungsbereich weiterer Ausführungen des Aktuators und
- Fig. 5:: eine vergrößerte Darstellung einer weiteren Ausführungsform.

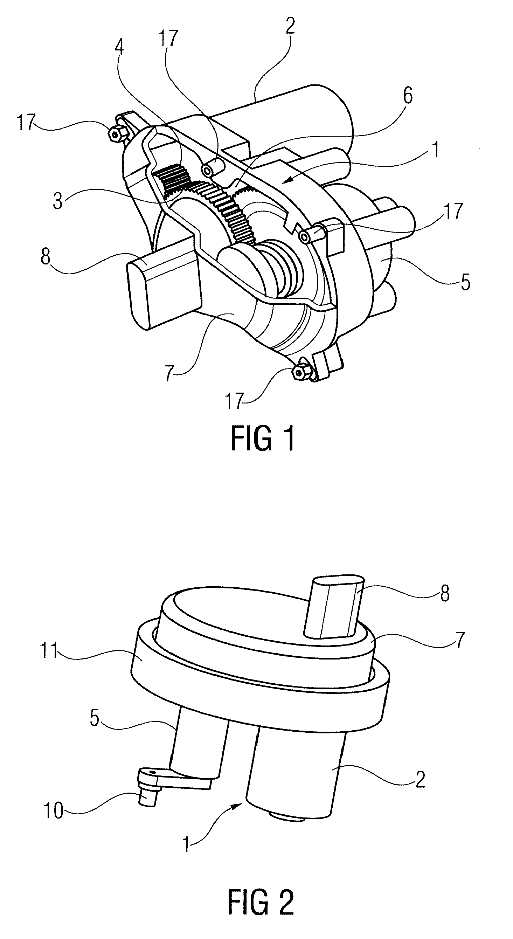

Der Aktuator in Figur 1 besteht aus einem Gehäuse 1, einem in einer ersten Kammer 2 des Gehäuses 1 angeordneten Elektromotor und einem Getriebe 3, welches eingangs-seitig mit einem auf der Welle des Elektromotors angeordneten Ritzels 4 und ausgangsseitig mit einem Stellglied 5 verbunden ist. Das Getriebe 3 ist in einer zweiten Kammer 6 des Gehäuses 1 angeordnet. Die Kammer 6 ist mit einem Deckel 7 verschlossen, der in dieser Ansicht geschnitten dargestellt ist. An der Außenseite des Deckels 7 ist ein Stecker 8 zur Kontaktierung des Aktuators einteilig am Deckel 7 angeformt. Die Symmetrieachsen des Elektromotors, des Getriebes 3 und des Stellglieds 5 sind annähernd in einer Linie angeordnet, so dass der Deckel 7 eine längliche Ausbildung aufweist. Die Befestigung des Deckels 7 am Gehäuse 1 erfolgt über fünf Schraubverbindungen 17.

Figur 2 zeigt einen Aktuator mit dem Gehäuse 1, welches die erste Kammer 2 für den Elektromotor und eine dritte Kammer 9 für das Stellglied 5 besitzt. Das Stellglied 5 besitzt einen verschwenkbaren Zapfen 10, der mit einer Klappe oder einem Koppelelement für eine Klappe verbunden werden kann. Elektromotor und Stellglied sind wie in Fig. 1 über ein Getriebe miteinander verbunden. Dieses Getriebe ist in der zweiten Kammer angeordnet, die von dem Deckel 7 verschlossen wird, indem der Rand 11 des Deckels 7 die zweite Kammer umgreift, so dass sie in dieser Darstellung nicht sichtbar ist. Der Deckel 7 und auch die zweite Kammer 6 besitzen einen runden Querschnitt. An der Außenseite des Deckels 7 ist ein Stecker 8 zur Kontaktierung des Aktuators einteilig am Deckel 7 angeformt.

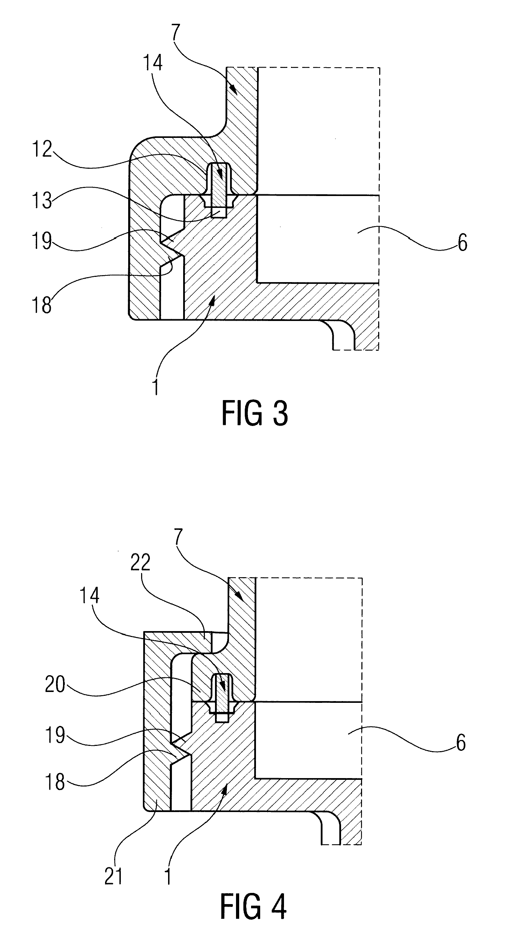

Figur 3 zeigt in vergrößerter Darstellung den Verbindungsbereich der zweiten Kammer 6 mit dem Deckel 7. Sowohl die Kammer 6 als auch der Deckel 7 besitzen in ihren aufeinanderliegenden Flächen je eine Nut 12, 13, in denen ein Dichtring 14 als Dichtung angeordnet ist. Der Deckel 7 umgreift die zweite Kammer 6. In diesem Bereich besitzt der Deckel 7 auf seiner Innenseite eine radial umlaufende Raststufe 18, während an der Außenseite der zweiten Kammer 6 eine radial umlaufende Raststelle 19 angeordnet ist. Im montierten Zustand bilden Raststufe 18 und die Raststelle 19 eine Rastverbindung.

In der dritten Ausführungsform gemäß Figur 4 wird die zweite Kammer 6 durch den Deckel 7 verschlossen, indem der Deckel 7 auf der Kammer 6 aufliegt. Der Deckel 7 hat dazu einen zur Auflage am Gehäuse 1 ausgebildeten Flansch 20. Auf den Deckel 7 ist ein Ring 21 derart aufgesetzt, dass ein am Ring 21 ausgebildeter Bund 22 den Flansch 20 umgreift. An der Innenseite des Rings 21ist eine radial umlaufende Raststufe 18 ausgebildet, die zusammen mit der an der Außenseite der zweiten Kammer 6 radial umlaufenden Raststelle 19 die Rastverbindung bildet.

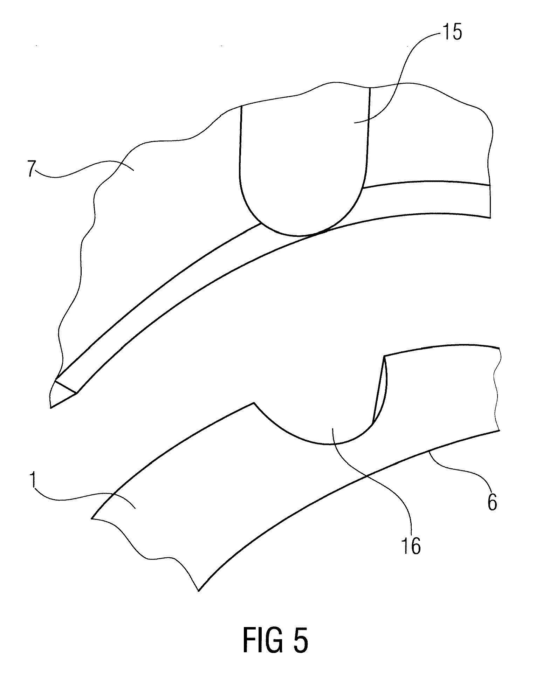

Zur lagerichtigen Montage des Deckels 7 gegenüber der zweiten Kammer 6 und damit dem Gehäuse 1 besitzt der Deckel 7 in Figur 5 an seiner Innenseite eine nach radial innen vorstehende Profilierung 15, die bei einer lagerichtigen Montage in eine korrespondierende, nutförmige Ausnehmung 16 an der Außenseite der Kammer 6 eingreift und somit das Verschließen der Kammer 6 durch den Deckel 7 ermöglicht.

## Patentansprüche

1. Aktuator mit einem Gehäuse, einem in einer Kammer des Gehäuses angeordneten Elektromotor und einem Getriebe, welches eingangsseitig mit der Welle des Elektromotors und ausgangsseitig mit einem Stellglied verbunden ist, wobei das Getriebe in einer zweiten Kammer des Gehäuses angeordnet ist, die mit einem Deckel verschlossen ist, **dadurch gekennzeichnet, dass** die zweite Kammer (6) einen runden Querschnitt besitzt und mit einem runden Deckel (7) verschlossen ist und dass der Deckel (7) gegen das Gehäuse mittels einer Rastverbindung (18, 19) gegen ein Lösen gesichert ist.

2. Aktuator nach Anspruch 1, **dadurch gekenn**- **zeichnet**, dass die Rastverbindung (18, 19) zwischen Deckel (7) und Gehäuse (1) ausgebildet ist.

3. Aktuator nach Anspruch 1, **dadurch gekenn- zeichnet**, dass die Rastverbindung (18, 19) zwischen einem Ring (21) und dem Gehäuse (1) ausgebildet ist, wobei der Ring (21) den Deckel (7) teilweise umgreift.

4. Aktuator nach zumindest einem der vorhergehenden Ansprüche, **dadurch gekennzeichnet, dass** zwischen der zweiten Kammer (6) und dem Deckel (7) eine Dichtung (14) zum Abdichten der zweiten Kammer (6) angeordnet ist.

5. Aktuator nach zumindest einem der vorhergehenden Ansprüche, **dadurch gekennzeichnet, dass** die zweite Kammer (6) und der Deckel (7) Mittel (15, 16) zum lagerichtigen Aufsetzen des Deckels (7) auf die zweite Kammer (6) aufweisen.
